# FASCICULE DE BREVET EUROPEEN

(11) **EP 0 609 164 B1**
(45) Date de publication et mention de la délivrance du brevet: **29.07.1998**
(21) Numéro de dépôt: 94460002.2
(22) Date de dépôt: 26.01.1994
(51) Int. Cl.: B01D 25/172, B01D 25/38

(54) **Dispositif de debatissage automatique pour filtre-presse**
Automatische Verschiebevorrichtung für Filterpresse
Automatic filter press plate separating device

(30) Priorité: 28.01.1993 FR 9301136
(43) Date de publication de la demande: 03.08.1994
(73) Titulaire: KAOLINS D'ARVOR SA, F-56270 Ploemeur (FR)
(72) Inventeur: Lamour, Jean-Claude, F-56270 Ploemeur (FR)
(74) Mandataire: Fournier, Michel Robert Marie

(56) Documents cités:
- DE-B- 1 302 541
- GB-A- 2 046 117

## Description

La présente invention concerne le débâtissage dans un filtre-presse, soit l'évacuation des gâteaux après qu'une opération de filtration a été effectuée.

Dans un filtre-presse, les plateaux sont suspendus par des oreilles latérales sur deux glissières entre une tête fixe et une tête mobile. Ils sont serrés les uns contre les autres en une pile horizontale lors de la filtration et, pour l'évacuation des gâteaux, ils sont écartés tour à tour de la pile, vers la tête mobile.

Généralement, cette manipulation des plateaux est réalisée de façon automatique au moyen d'un dipositif tel que décrit dans le brevet français FR-A-2 382 917 au nom de la S.A. des Fonderies et Ateliers L. Choquenet. Ce dispositif comprend, de chaque côté des plateaux, un chariot dit de halage fonctionnant en combinaison avec un chariot de blocage. Celui-ci a pour fonction de retenir le deuxième plateau dans la pile, tandis que le premier plateau est saisi par le chariot de halage et écarté vers la tête mobile, contre laquelle une pile de plateaux vides est reformée.

Dans le principe, les gâteaux sont censés tomber lors de cette manoeuvre, mais si les produits traités sont colmatants, leur décollage doit être effectué par des opérateurs se trouvant de chaque côté du filtre-presse et disposant d'une rame en bois qu'ils viennent insérer entre le gâteau et la toile filtrante du plateau. Il s'agit là d'une tâche répétitive pénible, et qui soumet la toile filtrante à des chocs qui en accélèrent l'usure.

On connaît par le brevet DE-B-1302541 au nom de E. Hoesch & Söhne, un filtre-presse pourvu d'un dispositif pour évacuer les gâteaux. Pour le débâtissage, chaque plateau de la pile est écarté tour à tour, deux lames, guidées par des pistons, descendent entre le gâteau et la toile filtrante, et puis elles remontent, en appuyant toujours pendant leur mouvement sur la toile. Il s'agit là d'un système qui accélère l'usure des toiles filtrantes.

On connaît aussi par le brevet FR-A-2 452 951 au nom de Ishigaki Kiko Co., Ltd, un filtre-presse pourvu d'un dispositif pour évacuer les gâteaux. Le dispositif agit par vibrations et, pour ce faire, les plateaux sont de conception spéciale : l'extrémité inférieure de la toile est fixée sur le bord inférieur du plateau, tandis que son extrémité supérieure est engagée sur un support susceptible de monter et descendre par rapport au haut du plateau, et contraint vers le haut par des ressorts. Pour le débâtissage, chaque plateau est écarté tour à tour de la pile, puis ledit support est soumis à des vibrations qui, transmises à la toile, ont pour effet de détacher le gâteau. Les moyens pour écarter les plateaux de la pile et les moyens générateurs de vibration sont montés sur un portique porté par deux chariots mobiles de chaque côté du filtre-presse. Un inconvénient de ce système est qu'il nécessite des plateaux spécifiques de structure complexe.

L'invention a pour objet principal de prévoir un dispositif de débâtissage automatique pour des filtres-presses comprenant des plateaux classiques.

Elle a également pour objet que le débâtissage soit réalisé sans fatigue pour la toile filtrante des plateaux.

A cet effet, dans un filtre-presse comportant des plateaux suspendus par des oreilles latérales sur des glissières entre une tête fixe et une tête mobile, lesquels plateaux, de rang 1 à N à partir de la tête mobile, sont recouverts d'une toile filtrante, un dispositif selon l'invention est caractérisé en ce qu'il comprend en combinaison sur un portique transversal apte à se déplacer longitudinalement au-dessus des plateaux, des moyens de débâtissage et des moyens de manipulation de-plateaux pour saisir tour à tour chaque plateau de rang n, le positionner en une position dite de débâtissage à une distance prédéterminée du plateau précédent de rang n-1, et l'amener contre celui-ci après l'opération de débâtissage, ledit portique comprenant en outre des moyens pour se positionner relativement au plateau de rang n-1,
les moyens de débâtissage comprenant un chariot à déplacement vertical et, disposés symétriquement en compas par rapport à un plan transversal, deux bras articulés autour d'axes transversaux sur ce chariot, portant chacun à son extrémité inférieure une lame transversale orientée obliquement par rapport à eux dans le sens de l'ouverture, les deux bras étant rappelés élastiquement en ouverture et étant guidés en fermeture/ouverture en fonction des mouvements de descente et de remontée du chariot,
de sorte qu'en fonctionnement, lors de la descente dudit chariot, les lames s'engagent entre les rebords des deux plateaux en position de débâtissage, y sont appliquées par la force de rappel en ouverture des bras pour s'insérer entre le bord interne supérieur des plateaux et le haut des gâteaux, puis descendent le long du fond des plateaux sans appuyer sur la toile, et s'escamotent en fermeture pour passer les bords inférieurs des plateaux ; et que lors de la remontée du chariot, les lames restent en position escamotée en fermeture pour passer entre les plateaux.

D'autres caractéristiques et avantages de l'invention apparaîtront à la lecture de la description suivante, faite en relation avec les dessins annexés, dans lesquels :
les Figs. 1a à 1i représentent les différentes phases du fonctionnement d'un dispositif conforme à l'invention,
la Fig. 2 est une vue de côté d'un tel dispositif,
la Fig. 3 est une coupe partielle schématique selon la ligne III-III de la Fig. 2,
la Fig. 4 est une vue schématique de dessus du dispositif sans les moyens de débâtissage,
les Figs. 5 et 6 sont respectivement une vue de bout et une vue de côté des seuls moyens de débâtissage, et
les Fig. 7a à 7c sont des vues schématiques illustrant le principe de fonctionnement de ces moyens de débâtissage.

Dans l'ensemble des dessins, les mêmes signes de référence ont été affectés partout aux mêmes éléments.

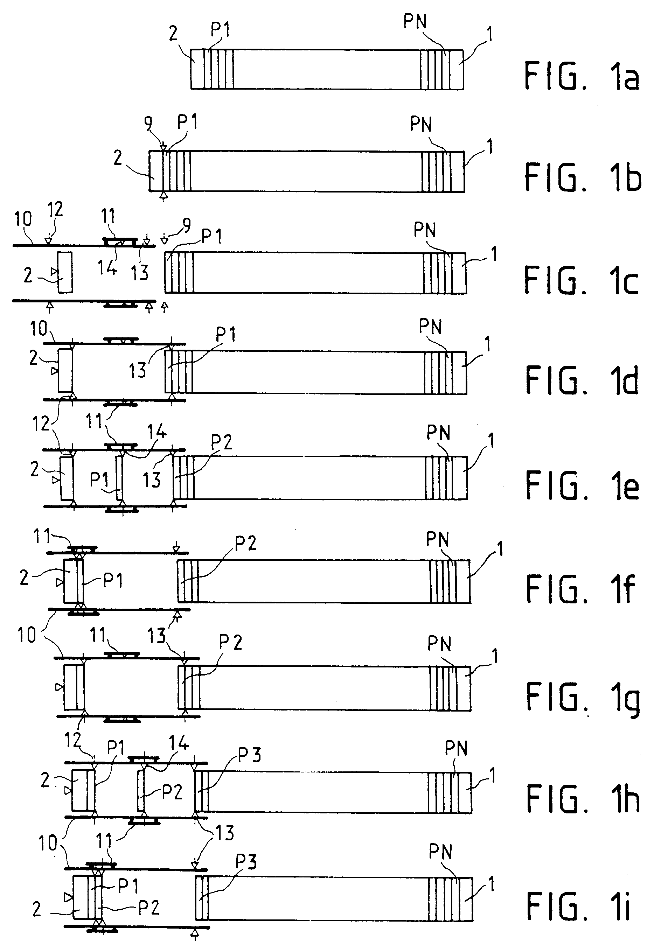

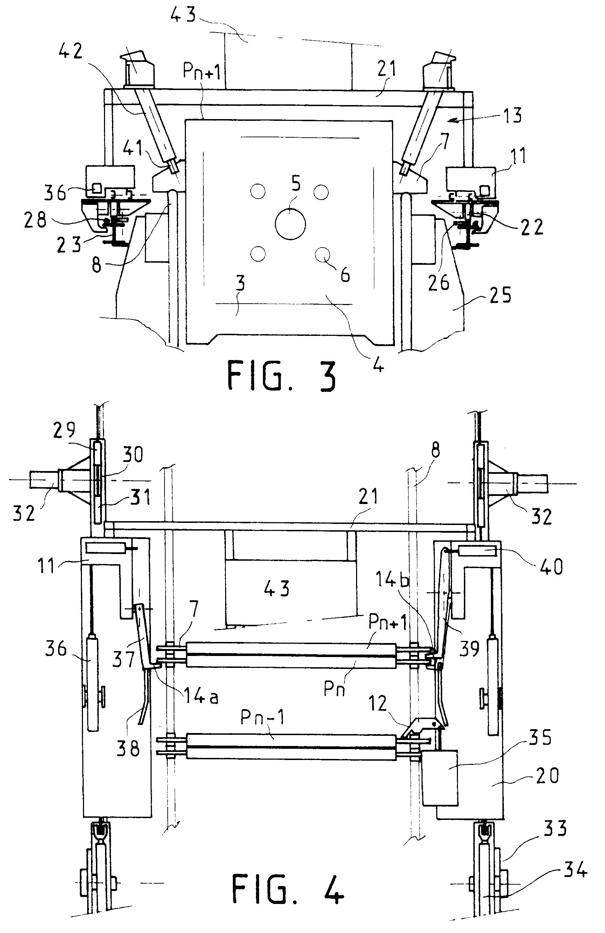

Dans le filtre-presse représenté schématiquement aux Figs. 1a à 1i, une suite de plateaux P1 à PN est placée sur des glissières entre une tête fixe 1 et une tête mobile 2. Les plateaux P sont de conception classique, fabriqués en polypropylène ou autre matière synthétique. Leur pourtour est un cadre 3 formant saillie autour de leur paroi 4, comme on peut le voir aux Figs. 3, 5 et 7. Ils présentent un trou central 5 pour le remplissage et, autour de ce trou, quatre bossages 6 de même épaisseur que le cadre 3, prévus pour éviter leur déformation. Ils sont recouverts des deux côtés d'une toile filtrante. Des oreilles latérales 7 les maintiennent suspendus sur des glissières 8 entre les têtes 1 et 2.

A la Fig. 1a, les plateaux P sont représentés serrés les uns contre les autres, tels qu'ils sont lors d'une opération de filtration. A la Fig. 1b, ils sont juste desserrés, le premier plateau P1 étant retenu par des moyens de blocage 9 pour se trouver à une distance déterminée de la tête mobile 2 lorsque celle-ci est reculée en bout de course, Fig. 1c.

A partir de la Fig. 1c, est représenté de façon très schématique un dispositif conforme à l'invention, comportant un chariot principal 10 se déplaçant sur des glissières latérales de chaque côté du filtre-presse, et portant par l'intermédiaire d'un portique, non représenté, les moyens de débâtissage, également non représentés. Sur le chariot principal 10, deux chariots latéraux 11 ont une aptitude de déplacement longitudinal. La Fig. 1c montre le dispositif reculé au-dessus de la tête mobile 2, et le plateau P1 débloqué

A la Fig. 1d, le chariot principal 10 a avancé et s'est positionné par rapport à la tête mobile 2 par l'intermédiaire de moyens de prise de référence 12. Il est alors bloqué en position, et à son tour, il retient le plateau P2 par l'intermédiaire des moyens 13 qu'il comporte dans sa partie avant.

Les chariots secondaires 11 se déplacent alors vers l'avant, pour venir saisir le plateau P1 avec leurs moyens de préhension 14. Ils positionnent le plateau P1 dans une position précise. L'écartement entre le plateau P1 et la tête mobile 2 est donc à une cote précise, de même qu'ils sont parfaitement positionnés par rapport aux moyens de débâtissage qui peuvent entrer en action d'une manière qui sera décrite dans la suite.

Une fois le débâtissage effectué entre la tête mobile 2 et le plateau P1, ce dernier toujours tenu par les chariots secondaires 11 est amené par eux contre la tête mobile 2, Fig. 1f, tandis que le plateau P2 est libéré par les moyens 13.

Le chariot principal 10 est alors débloqué puis avance d'un pas pour se positionner maintenant par rapport au plateau P1, Fig. 1g. Les états 1h et 1i sont les équivalents des états 1e et 1f pour le plateau P2. Les cycles sont répétés jusqu'au dernier plateau PN.

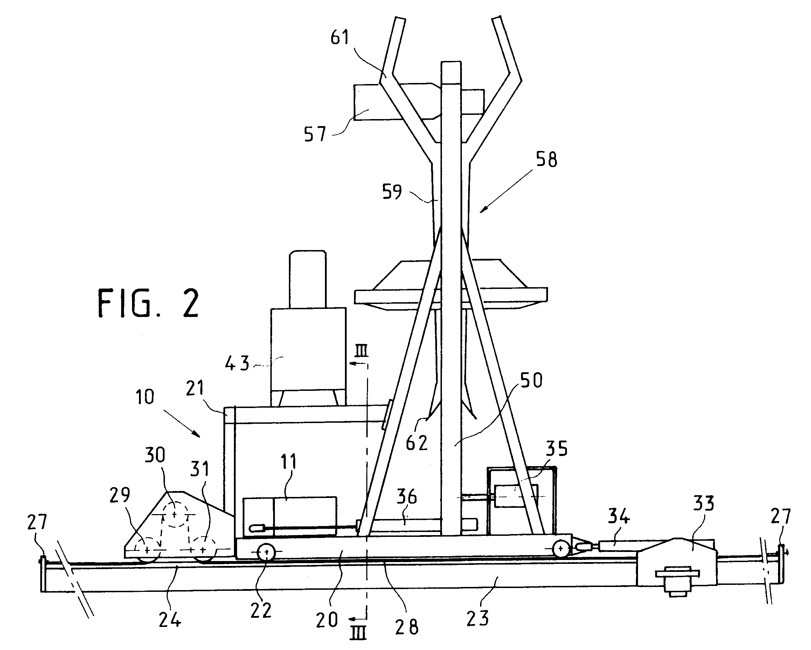

Les moyens de manipulation des plateaux P dont le fonctionnement vient d'être décrit apparaissent aux Figs. 2 à 4. Le chariot principal 10 présente deux plates-formes longitudinales 20 reliées par des traverses telles que 21. Chaque plate-forme 20 comporte des galets avant et arrière 22 portant sur le chemin de roulement 24 d'un rail 23 monté sur le côté du bâti 25 du filtre-presse. Des galets de centrage 26 à axes verticaux roulent sur le côté intérieur des chemins de roulement 24, lesquels comportent à leurs extrémités des butoirs 27.

Le déplacement du chariot principal 10 est assuré par un système d'entraînement à chaîne et à roues à empreintes : deux chaînes 28 courent le long des chemins de roulement 24, fixées aux deux extrémités. Chacune passe dans un ensemble de roues à empreintes 29 à 31 monté de chaque côté à l'avant du chariot 10. Les deux roues 30 sont entraînées par des moteurs 32, Fig. 4, fonctionnant de façon synchrone.

A l'arrière, le chariot 10 est solidarisé avec un double ensemble de blocage 33 - un système de frein sur chaque rail 23 - par l'intermédiaire de vérins 34.

Les moyens 12 du chariot 10 servant à la prise de référence sur la tête mobile 2, puis sur les plateaux empilés contre elle à mesure du débâtissage, sont visibles à la Fig. 4, où ils n'ont été représentés que dans la partie droite à des fins de clarté et de meilleure compréhension du dessin. Ils consistent en deux doigts, montés chacun à l'arrière d'une plate-forme 20 et commandé par un vérin 35. A chaque avance d'un pas du chariot 10, les doigts 12 viennent s'engager devant les oreilles 7 du dernier plateau Pn-1 empilé contre la tête mobile 2. Bien entendu, elle aussi comporte des oreilles comme les plateaux, puisque la première prise de référence est réalisée par rapport à elle.

Les chariots secondaires 11 servant à la manipulation des plateaux P sont montés coulissants longitudinalement sur les plates-formes 20. Ils sont commandés en déplacement par des vérins 36. Comme on l'a vu précédemment à propos des Figs. 1a à 1h, les chariots 11 comportent des moyens de préhension de plateau portant le repère 14. Ces moyens se composent sur chaque chariot 11 de deux doigts indépendants 14a, 14b, Fig. 4. A des fins de clarté et de compréhension, seul le doigt 14a a été représenté dans la partie gauche de la Fig. 4.

Les doigts 14a se trouvent à l'extrémités de bras 37 articulés sur le côté intérieur des chariots 11. Sous leur extrémité adjacente au doigt 14a, les bras 37 comportent un téton engagé dans une gorge 38 ménagée dans les plates-formes 20, laquelle gorge se subdivise en un tronçon avant orienté longitudinalement et un tronçon arrière obliquant vers l'extérieur. On comprend ainsi qu'en position avancée des chariots 11, les doigts 14a se trouvent engagés dans la trajectoire des oreilles 7 des plateaux, qu'ils demeurent dans cette position d'engagement lors du recul des chariots 11 jusqu'en une position intermédiaire, et qu'ils sont ensuite escamotés lorsque les chariots 11 continuent de reculer jusqu'en fin de course.

Les doigts 14b se trouvent à l'extrémité de bras 39 également articulés sur le côté intérieur des chariots 11 et commandés en pivotement par des vérins 40. En position engagée, les doigts 14b sont légèrement devant les doigts 14a et en sont écartés d'une distance légèrement supérieure à l'épaisseur des oreilles 7 des plateaux.

Le chariot 10 comporte en outre des moyens 13 pour retenir le plateau P de rang Pn+1 lorsqu'un plateau P de rang n est manipulé par les moyens 14. Les moyens 13 sont représentés à la Fig. 4. Ils sont montés sur un élément avant du bâti du chariot 10, ici la traverse 21. Ce sont des pattes 41 portées aux extrémités de tiges de vérins 42 qui descendent pour s'engager derrière les oreilles 7 des plateaux.

En fonctionnement, une fois q'un plateau Pn-1 a été rempilé du côté de la tête mobile, les doigts 12 sont escamotés, et les chariots 11 sont en position reculée. Par conséquent les doigts 14a sont escamotés, et les doigts 14b le sont également par rentrée des tiges des vérins 40. De même, les moyens 13, c'est-à-dire les palettes 41 à la Fig. 3, sont escamotées vers le haut. Le chariot 10 est donc libre de tout mouvement par rapport aux plateaux P, et il peut avancer d'un pas vers la tête fixe, lequel pas correspond à l'épaisseur des plateaux.

Ensuite, les doigts 12 sont engagés devant les oreilles du plateau Pn-1, comme illustré à la Fig. 4, et les chariots 11 se déplacent vers l'avant, ce qui a pour effet d'engager les doigts 14a derrière les oreilles du plateau Pn. Les chariots 11 progressent jusqu'en bout de course, en faisant avancer éventuellement le plateau Pn, avec également pour effet d'appliquer fermement les doigts 12 contre les oreilles du plateau Pn-1. Alors, les freins 33 entrent en action pour bloquer le chariot 10.

Les plateaux Pn-1 et Pn sont ainsi fermement immobilisés, précisément écartés l'un de l'autre à une cote dite de débâtissage, et précisément positionnés par rapport au chariot 10, et par conséquent par rapport aux moyens de débâtissage qui vont être décrits dans la suite, et qui peuvent dès lors entrer en action.

Une fois que ceux-ci ont fini d'opérer, les doigts 14b sont engagés devant les oreilles du plateau Pn et les pattes 41 derrière celles du plateau Pn+1 pour le retenir. Les chariots 11 reculent pour amener le plateau Pn vers la tête mobile. En fin de course de recul, les doigts 14a s'escamotent et le plateau Pn s'applique contre le plateau Pn-1.

Les freins 33 sont alors desserrés, les doigts 14b et les pattes 41 escamotés, de sorte que le chariot 10 peut avancer d'un pas pour un nouveau cycle.

Il est bien évident que si un plateau P est défectueux, il faut profiter pour le changer de son transfert de la pile contre la tête fixe à la pile contre la tête mobile. Or, ce transfert s'accomplit sous les moyens de débâtissage qui interdisent donc d'extraire le plateau par le haut. C'est pourquoi il est prévu, selon l'invention, une liaison par vérins entre le chariot 10 et les freins 33. En cas de besoin, les vérins 34 sont déployés pour dégager le plateau à changer, les freins 33 étant serrés. Lorsque les vérins 34 sont rétractés, le chariot 10 reprend exactement sa position antérieure, si bien que le débâtissage peut se poursuivre.

Les moyens électriques, automate, et centrale hydraulique commandant les différents mouvements sont embarqués sur le chariot 10. Ils portent la référence 43 aux Figs. 2 à 4.

Les moyens de débâtissage sont visibles aux Figs. 2, 5, 6 et 7a à 7c. Ils sont montés sur une partie portique proprement dite portée sur le chariot 10, et qui comprend essentiellement deux montants 50 réunis par une poutre supérieure transversale 51.

Le long des côtés intérieurs des montants 50, sont ménagés des chemins de roulement 52 avec butées d'amortissement de fin de course pour un chariot 53. Le chariot 53 est commandé en montée et en descente au moyen de chaînes sans fin 55 entraînées par des roues à empreinte 54. Les deux roues 54 sont reliées à un même arbre 56 entraîné par un moteur 57.

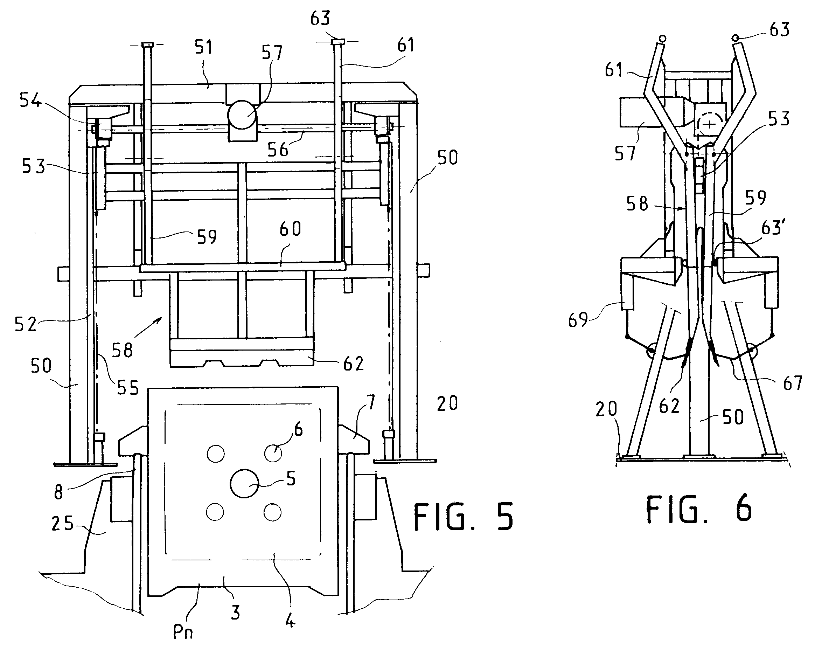

Le chariot 53 porte les moyens de débâtissage, à savoir deux systèmes de bras 58 qui, vus de côté à la Fig. 6, sont disposés en compas.

Chaque bras 58 est constitué de deux montants 59, Fig. 5, réunis par des traverses 60. Les montants 59 sont articulés chacun au chariot 53. Il sont prolongés au-delà de l'articulation vers le haut par des branches 61 qui sont coudées et s'écartent extérieurement par rapport au plan de symétrie transversal du montage en compas. Les branches 61 portent à leur extrémité un rouleau 63 d'axe transversal dépassant de chaque côté, comme le montre la Fig. 5. Des rouleaux identiques 63' sont prévus sur les montants 59, à distance de leur extrémité inférieure, et sur leur face extérieure, toujours en se référant au montage en compas.

A la base des bras 58, sont montées des lames transversales 62, de largeur légèrement inférieure à la largeur intérieure des plateaux. Elles sont fixées dans un support en sandwich permettant de régler la profondeur et leur angle d'attaque : elles sont orientées obliquement par rapport aux bras 58, de façon à être plus ouvertes. En réalité, leur inclinaison est calculée de manière à correspondre sensiblement à celle des bords internes supérieurs des plateaux, comme l'illustrent les Figs. 7a à 7c. D'autre part, les lames 62 sont échancrées en face des bossages 6 des plateaux P.

Aux Figs. 7a à 7c, apparaissent également des pistes profilées de guidage pour les rouleaux 63 et 63', qui commandent les bras 58 en fermeture et en ouverture, ceux-ci étant d'autre part rappelés en ouverture par des ressorts, non montrés, se trouvant au niveau des articulations des montants 59. Il y a deux pistes de guidage 64 et 65 pour chaque rouleau 63, l'une affectée à la descente, et l'autre à la montée, et une piste de guidage 66 pour chaque rouleau 63'. Ces pistes de guidage vont être décrites plus en détail dans la suite, lors de l'explication du fonctionnement.

A la Fig. 6, ont en outre été représentés des dispositifs de râclage des lames 62 empêchant la remontée de matière. Il s'agit de volets 67 articulés sur des éléments de bâti 68 et commandés par des vérins 69. Les volets 67 sont pourvus d'une bavette râclant les lames 62 lors de leur remontée. A l'intérieur des bras 58, la remontée de produit est également empêchée par une plaque flexible 70, repliée en dièdre, réunissant les bords supérieurs des lames 62. La plaque 70 sert de plus à la retenue des gâteaux lors du décollage, pour empêcher qu'ils ne se cassent.

On va maintenant décrire le fonctionnement du système de débâtissage en se référant aux Figs. 6 et 7a à 7c. A la Fig. 6, les bras 58 sont en position haute. Ils sont retenus en fermeture par appui des rouleaux 63' sur les pistes de guidage 66. Les rouleaux 63 sont au-dessus des pistes de guidage 64.

Au début d'un cycle de débâtissage, lorsque s'amorce le mouvement de descente, les bras 58 restent maintenus en fermeture par les rouleaux 63' sur les pistes de guidage 66 jusqu'à ce que les lames 62 pénètrent dans l'espace entre les rebords supérieurs 3 des plateaux Pn-1 et Pn en position de débâtissage.

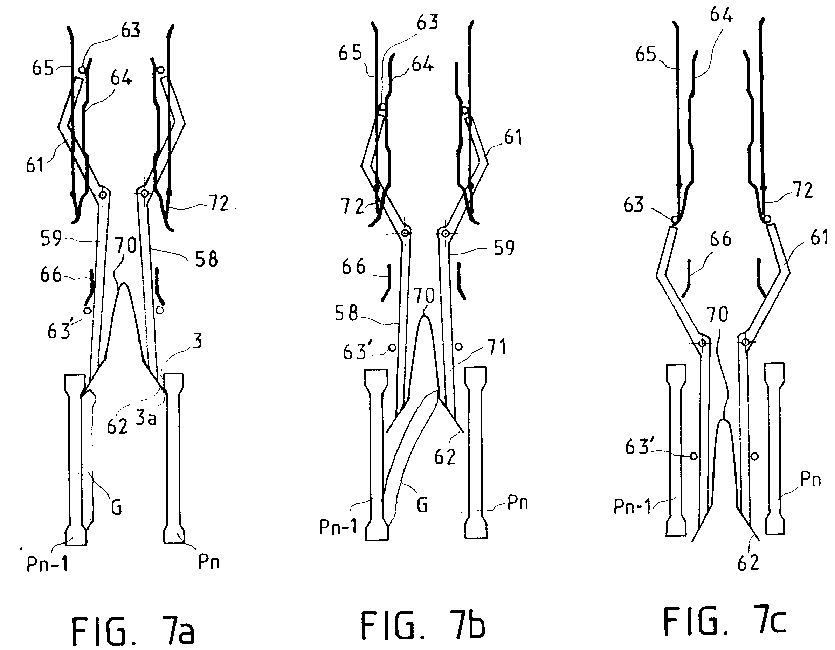

Alors, les rouleaux 63' arrivent sur la partie divergente des pistes de guidage 66, de sorte que les bras 58 s'écartent du fait d'être rappelés en ouverture et que les lames viennent s'appuyer en force sur les rebords 3. Quand elles arrivent au niveau du bord interne 3a des plateaux P, elles s'insèrent donc entre celui-ci et le haut du gâteau G, comme l'illustre la Fig. 7a. Dans le même temps, les rouleaux 63 arrivent en engagement sur les pistes de guidage 64. Dans une première phase, ils sont guidés de manière que les lames 62 descendent le long du fond 4 des plateaux sans s'y appuyer, ou même très légèrement écartées. Par la plaque 70, le gâteau G est empêché de se casser en deux en cours de décollage, comme l'illustre la Fig. 7b. On voit également sur cette figure que les rouleaux 63 sont arrivés sur une deuxième section des pistes de guidage 64 avec pour effet de refermer légèrement les bras 58, donc d'écarter un peu plus les lames 62 du fond des plateaux pour le passage au-dessus du trou central 5, où le repli de la toile filtrante la rend plus vulnérable. Ensuite, une troisième section des pistes de guidage 64, dans le prolongement de la première section, correspond au passage des lames 62 le long de la partie inférieure du fond 4.

Quand les lames 62 arrivent à proximité du bord inférieur 3a des plateaux, le gâteau est complètement décollé et évacué, et les bras 58 se referment, les rouleaux 63 passant sur une quatrième section divergente des pistes de guidage 64. Ils passent alors de l'autre côté de volets 72 n'autorisant qu'un sens de passage et qui les aiguillent sur les pistes de guidage 65, Fig. 7. Lors du mouvement de remontée, les bras 58 sont ainsi maintenus fermés, les lames 62 étant à distance des plateaux Pn-1 et Pn. En fin de remontée, les rouleaux 63 quittent les pistes de guidage 65. Les bras 58 s'ouvrent légèrement mais sont à nouveau retenus par les rouleaux 63' reprenant appui contre le haut des pistes de guidage 66. Cette légère ouverture des bras 58 est nécessaire pour refaire passer les rouleaux 63 du côté des pistes de guidage 64.

## Revendications

1. Dispositif de débâtissage pour un filtre-presse comportant des plateaux (P1 à PN) suspendus par des oreilles latérales (7) sur des glissières (8) entre une tête fixe (1) et une tête mobile (2), lesquels plateaux, de rang 1 a N à partir de la tête mobile (2), sont recouverts d'une toile filtrante, et comprenant en outre en combinaison sur un portique transversal (10, 50, 51) apte à se déplacer longitudinalement au dessus des plateaux, des moyens de débâtissage et des moyens de manipulation de plateaux pour saisir tout à tour chaque plateau de rang n, le positionner en une position dite de débâtissage à une distance prédéterminée du plateau précédent de rang n-1, et l'amener contre celui-ci après l'opération de débâtissage, ledit portique comprenant en outre des moyens pour se positionner relativement au plateau de rang n-1,
les moyens de débâtissage comprenant un chariot (53) à déplacement vertical et, disposés symétriquement en compas par rapport à un plan transversal, deux bras (58) articulés autour d'axes transversaux sur ce chariot (53), portant chacun à son extrémité inférieure une lame transversale (62) orientée obliquement par rapport à eux dans le sens de l'ouverture, les deux bras (58) étant rappelés élastiquement en ouverture et étant guidés en fermeture/ouverture en fonction des mouvement de descente et de remontée du chariot (53),
de sorte qu'en fonctionnement, lors de la descente dudit chariot (53), les lames (62) s'engagent entre les rebords (3) des deux plateaux en position de débâtissage, y sont appliqués par la force de rappel en ouverture pour s'insérer entre le bord supérieur interne (3a) des plateaux et le haut des gâteaux (G), puis descendent le long du fond des plateaux sans appuyer sur la toile, et s'escamotent en fermeture pour passer les rebords inférieurs des plateaux ; et que lors de la remontée du chariot (53), les lames (62) restent en position escamotée en fermeture pour passer entre les plateaux.

2. Dispositif selon la revendication 1, caractérisé en ce que les moyens de guidage en ouverture/fermeture des bras (58) des moyens de débâtissage sont des pistes profilées (64 à 66) sur lesquelles sont en appui des rouleaux solidaires des bras (58).

3. Dispositif selon la revendication 1 ou 2, caractérisé en ce que les lames (62) sont montées aux extrémités des bras (58) dans des supports en sandwich permettant de régler la profondeur et leur incidence.

4. Dispositif selon l'une des revendications 1 à 3, caractérisé en ce qu'il est prévu des moyens de râclage (67) des lames (62) pour éviter la remontée de produit.

5. Dispositif selon l'une des revendications 1 à 4, caractérisé en ce que les bords supérieurs des lames (62) sont réunis par une plaque flexible (70) repliée en dièdre.

6. Dispositif selon l'une des revendications 1 à 5, caractérisé en ce que ledit portique (10, 50, 51) comprend, fixés sur un chariot (10), deux montants latéraux (50) et une poutre transversale (51) portant les moyens de débâtissage, et en ce que le chariot (10) comporte deux plates-formes latérales (20) mobiles longitudinalement sur des rails (23), lesquelles plates-formes sont réunies par des traverses (21) et portent lesdits moyens de manipulation de plateaux.

7. Dispositif selon la revendication 6, caractérisé en ce que les plates-formes (20) comportent à l'avant des moyens d'entraînement sur les rails (23) et, à l'arrière, des moyens de blocage (33) sur les mêmes rails (23).

8. Dispositif selon la revendication 7, caractérisé en ce que les plates-formes (20) sont réunies aux moyens de blocage (33) par des vérins (34), de manière à être déplaçables en translation longitudinale par rapport à ces moyens de blocage (33).

9. Dispositif selon l'une des revendications 6 à 8, caractérisé en ce que lesdits moyens de manipulation de plateaux sont des doigts escamotables (14a, 14b) montés sur des chariots secondaires (11) mobiles longitudinalement sur les plates-formes (20).

10. Dispositif selon l'une des revendications 6 à 9, caractérisé en ce que lesdits moyens de positionnement du portique (10, 50, 51) par rapport à un plateau préalablement rempilé contre la tête mobile (2) sont des doigts escamotables (12) portés dans la partie arrière des plates-formes (20).

11. Dispositif selon l'une des revendications 6 à 10, caractérisé en ce qu'aux moyens de manipulation de plateau (Pn), sont associés des moyens de retenue (13) du plateau suivant (Pn+1), lesquels moyens de retenue (13) sont montés à l'avant des plates-formes (20).

## Claims

1. A dismantling device for a filter press comprising plates (P1 to PN) suspended by lateral lugs (2) on slide bars (8) between a fixed head (1) and a mobile head (2), said plates, arranged in order from 1 to N starting from the mobile head (2), being covered by a filter cloth, having in addition in combination on a transverse gantry (10, 50, 51) designed to be displaced longitudinally above the plates, dismantling means and means for handling the plates in order to pick up each plate of rank n in turn, position it in what is referred to as a dismantling position at a predetermined distance from the preceding plate of rank n-1 and bring it to bear on this latter after the dismantling operation, said gantry also having means for positioning itself relative to the plate of rank n-1,
the dismantling means having a vertically displaceable carriage (53) and, symmetrically arranged as a compass relative to a transverse plane, two arms (58) articulated about transverse axes on this carriage (53), each bearing at its bottom end a transverse blade (62) obliquely oriented relative to these in the direction of opening, the two arms (58) being resiliently loaded for opening and being guided during opening/closing depending on the lowering and lifting movements of the carriage (53),
so that during operation, when said carriage (53) is being lowered, the blades (62) engage between flanges (3) of the two plates in the dismantling position, are applied thereto by the return force during opening so as to be inserted between inner top edges (3a) of the plates and the height of the cakes (G), are then lowered along the base of the plates without bearing on the cloth and are folded back during closing so as to pass the lower flanges of the plates; and when the carriage (53) is being lifted, the blades (62) remain in the folded-back closing position so as to pass between the plates.

2. A device as claimed in claim 1, characterised in that the guiding means for opening/closing the arms (58) of the dismantling means are profiled tracks (64 to 66) against which rollers integral with the arms (58) bear.

3. A device as claimed in claim 1 or 2, characterised in that the blades (62) are mounted at the ends of the arms (58) in sandwich supports so that the depth and angle of attack thereof can be adjusted.

4. A device as claimed in one of claims 1 to 3, characterised in that means for scraping (67) the blades (62) are provided to avoid product being lifted back up.

5. A device as claimed in one of claims 1 to 4, characterised in that the top edges of the blades (62) are joined by a flexible plate (70) folded back in a dihedral.

6. A device as claimed in one of claims 1 to 5, characterised in that said gantry (10, 50, 51) has, fixed onto a carriage (10), two lateral uprights (50) and a cross-beam (51) bearing the dismantling means and the carriage (10) has two lateral platforms (20) which can be moved longitudinally on tracks (23), said platforms being joined by cross-pieces (21) and bearing said plate handling means.

7. A device as claimed in claim 6, characterised in that the platforms (20) have, at the front, means for providing drive on the tracks (23) and, at the rear, means to provide locking (33) on the same tracks (23).

8. A device as claimed in claim 7, characterised in that the platforms (20) are joined to locking means (33) by jacks (34) so that they can be displaced in longitudinal translation relative to these locking means (33).

9. A device as claimed in one of claims 6 to 8, characterised in that said plate-handling means are foldable fingers (14a, 14b) mounted on secondary carriages (11) which move longitudinally on platforms (20).

10. A device as claimed in one of claims 6 to 9, characterised in that said means for positioning the gantry (10, 50, 51) relative to a plate previously stacked against the mobile head (2) are foldable fingers (12) mounted in the rear part of the platforms (20).

11. A device as claimed in one of claims 6 to 10, characterised in that the means for handling the plate (Pn) are associated with means for retaining (13) the subsequent plate (Pn+1), said retaining means (13) being mounted at the front of the platforms (20).

## Patentansprüche

1. Vorrichtung zum Entfernen von Filterkuchen für eine Filterpresse, die Platten (P1 bis PN) aufweist, die an seitlichen Aufhängern (7) auf Gleitschienen (8) zwischen einem festen Ende (1) und einem mobilen Ende (2) aufgehängt sind, wobei die Platten 1 bis N, gezählt vom mobilen Ende (2), mit einem Filtertuch bedeckt sind, und die außerdem kombiniert auf einem quer angeordneten, brückenförmigen Gerüst (10, 50, 51), das sich in Längsrichtung oberhalb der Platten bewegen kann, Mittel zum Entfernen des Filterkuchens und Mittel zur Handhabung der Platten aufweist, die nacheinander jede Platte n ergreifen, sie in die Position zur Entfernung des Filerkuchens mit einem bestimmten Abstand zur Platte n-1 bringen und sie nach der Entfernung des Filterkuchens an diese heranführen, wobei das brückenförmige Gerüst weiterhin Mittel für seine Positionierung relativ zur Platte n-1 aufweist,
wobei die Mittel zum Entfernen des Filterkuchens einen Wagen (53) für die Vertikalverschiebung und zwei symmetrisch und in Form eines Zirkels, bezogen auf eine quer verlaufende Ebene, angeordnete Arme (58) aufweist, die schwenkbar um quer angeordnete Achsen mit dem Wagen verbunden sind (53) und jeweils an ihrem unteren Ende eine schräg zu den Armen in Öffnungsrichtung angeordnete Querzunge (62) aufweisen, wobei die beiden Arme (58) elastisch in den geöffneten Zustand ausgestellt sind und in Abhängigkeit von der Abwärts- und der nachfolgenden Aufwärtsbewegung des Wagens (53) in den geöffneten oder geschlossenen Zustand geführt werden,
so daß im Betrieb bei der Abwärtsbewegung des Wagens (53) die Zungen (62) zwischen den hervorstehenden Rändern (3) der beiden in der Position zum Entfernen des Kuchens befindlichen Platten eingepaßt werden, durch die im geöffneten Zustand wirkende Rückstellkraft dort anliegen, um zwischen dem oberen inneren Rand (3a) der Platten und dem oberen Ende der Kuchen (G) einzugreifen, und anschließend entlang der Platten abgesenkt werden, ohne auf das Tuch zu drücken, und schließlich in den geschlossenen Zustand einklappen, um die unteren hervorstehenden Ränder der Platten zu passieren, und so daß im Betrieb bei der nachfolgenden Aufwärtsbewegung des Wagens (53) die Zungen (62) in der eingeklappten Position im geschlossenen Zustand verbleiben, um zwischen den Platten hindurchzulaufen.

2. Vorrichtung nach Anspruch 1, dadurch gekennzeichnet, daß die Mittel, mit denen die Arme (58) in den geöffneten/geschlossenen Zustand geführt werden, der Mittel zum Entfernen des Filterkuchen Profilierte Schienen (64 bis 66) sind, auf denen die mit den Armen (58) verbundenen Rollen mit Druck aufliegen.

3. Vorrichtung nach Anspruch 1 oder 2, dadurch gekennzeichnet, daß die Zungen (62) am Ende der Arme (58) in übereinandergeschichteten Halterungen montiert sind, die es ermöglichen, die Tiefe und den Anstellwinkel zu regulieren.

4. Vorrichtung nach einem der Ansprüche 1 bis 3, dadurch gekennzeichnet, daß Abstreifvorrichtungen (67) für die Zungen (62) vorgesehen sind, um das Aufsteigen von Produkt zu vermeiden.

5. Vorrichtung nach einem der Ansprüche 1 bis 4, dadurch gekennzeichnet, daß die oberen Ränder der Zungen (62) durch eine biegsame Platte (70) miteinander verbunden sind, die zu einem V gebogen ist.

6. Vorrichtung nach einem der Ansprüche 1 bis 5, dadurch gekennzeichnet, daß das brückenförmige Gerüst (10, 50, 51) zwei seitliche Träger (50) und einen Querträger (51) aufweist, die auf einem Wagen (10) befestigt sind und die Einrichtung zum Entfernen von Filterkuchen tragen, und daß der Wagen (10) zwei seitliche auf Schienen (23) in Längsrichtung bewegliche Plattformen (20) aufweist, wobei die Plattformen durch Querverbindungen (21) verbunden sind und die Mittel zur Handhabung der Platten tragen.

7. Vorrichtung nach Anspruch 6, dadurch gekennzeichnet, daß die Plattformen (20) Antriebsvorrichtungen vorne auf den Schienen (23) und Bremsvorrichtungen (33) hinten auf den gleichen Schienen (23) aufweisen.

8. Vorrichtung nach Anspruch 7, dadurch gekennzeichnet, daß die Plattformen (20) mit den Bremsvorrichtungen (33) über Kolben (34) verbunden sind und somit in Längsrichtung der Bremsvorrichtungen (33) bewegt werden können.

9. Vorrichtung nach einem der Ansprüche 6 bis 8, dadurch gekennzeichnet, daß die Mittel zur Handhabung der Platten einklappbare Enden (14a, 14b) sind, die auf zweiten Wagen (11) angeordnet sind, die auf den Plattformen (20) in Längsrichtung bewegbar sind.

10. Vorrichtung nach einem der Ansprüche 6 bis 9, dadurch gekennzeichnet, daß die Mittel zur Positionierung des Gerüsts (10, 50, 51) in bezug auf eine Platte, die vorher gegen das mobile Ende (2) gestapelt wurde, einklappbare Enden (12) im hinteren Bereich der Plattformen (20) sind.

11. Vorrichtung nach einem der Ansprüche 6 bis 10, dadurch gekennzeichnet, daß die Mittel zur Handhabung der Platte (Pn) mit Haltevorrichtungen (13) der folgenden Platte (Pn+1) verbunden sind, wobei die Haltevorrichtungen (13) vor den Plattformen (20) angeordnet sind.
